# EUROPEAN PATENT SPECIFICATION

(11) **EP 3 352 963 B1**
(45) Date of publication and mention of the grant of the patent: **28.08.2019**
(21) Application number: 16774637.9
(22) Date of filing: 22.09.2016
(51) Int. Cl.: B29C 45/16, B29C 45/32, B29C 45/00

(54) **PERFECTED APPARATUS TO INJECTION CO-MOULD AND ASSEMBLE PLASTIC MATERIAL OBJECTS**
OPTIMIERTE VORRICHTUNG FÜR CO-SPRITZGIESSEN UND MONTAGE VON KUNSTSTOFFGEGENSTÄNDEN
APPAREIL PERFECTIONNÉ DE CO-MOULAGE PAR INJECTION ET D'ASSEMBLAGE D'OBJETS EN MATIÈRE PLASTIQUE

(30) Priority: 23.09.2015 IT UB20153830
(43) Date of publication of application: 01.08.2018
(73) Proprietor: ABATE BASILIO&C. S.N.C., 25011 Calcinato (IT)
(72) Inventor: ABATE, Davide, 25011 Calcinato Brescia (IT)
(74) Representative: Coloberti, Luigi
(86) International application number: PCT/EP2016/072520
(87) International publication number: WO 2017/050880

(56) References cited:
- WO-A2-2007/054235
- "Brevetto mondiale esclusivo-Tecnologia IMA assemblaggio nello stampo per contenitori con manici", , 5 December 2008 (2008-12-05), XP055245947, Retrieved from the Internet: URL:http://www.abatestampi.it/pdf/ima_ital iano.pdf [retrieved on 2016-01-29]

## Description

### BACKGROUND OF THE INVENTION

The present invention refers to the production of plastic material objects including separate parts, being able to be assembled and connected by pivoting during the extraction step from a mould.

Particularly, the invention concerns a perfected apparatus to co-mould, by plastic material injection, objects that include separate parts provided with a hinge pin and an annular element, the latter being reciprocally and automatically connected, in an articulated manner, during an extraction step of the moulded object from a mould, after opening the mould itself.

### STATE OF THE ART

In the production of objects in thermoplastic material by injection moulding procedures, particularly objects formed by multiple pieces, which must be assembled and connected by pivoting, for example in the production of containers being provided with a supporting handle, there is the need to have apparatuses suitable to allow co-moulding and automatically assembling the different pieces directly inside the mould.

Apparatuses to co-mould containers being provided with a pivotally connected handle are described for example in IT-A-1.260.680, EP-A-0912411, and US-A-6.234.782.

Particularly IT-A-1.260.680 shows a press to co-mould containers being provided with a handle, wherein an extraction system is used, which is separated from the commands to open the press, and wherein the steps of opening the mould and assembling the handle to the container are executed in different times, before the final step of extracting the moulded object.

In turn, EP-A-0912411 shows an articulated connection between plastic material parts, wherein the two parts of the coupling are moulded at the same time, and wherein the two parts of the coupling are assembled after being partially removed from the injection mould.

In turn, US-A-6.234.782 shows an injection mould to manufacture a container provided with a handle, which is automatically assembled to the container by an additional device being actuated by a respective command cylinder, separated from the extraction device.

Solutions like that are architecturally complex; moreover, they require cycle times that are considered long for fast operating presses, because the mould opening, pieces assembly and extraction step must occur consequently in different times.

The European patent EP 1 960 177 overcomes the above-described limitations by presenting a method and an apparatus to injection co-mould objects in plastic material, including pieces that are articulated to each other. Particularly it is made possible an automatic assembly of the pieces directly in the mould, during the moulded object extraction step itself: in that manner, it is possible to decrease the working cycle times.

Moreover, such an apparatus is suitable to be employed in a normal injection moulding press, by means of which the linear movements of some parts of the press itself are exploited to obtain the assembly of the pieces, by means of a simple solution that does not require using auxiliary command devices and systems.

Although the method and apparatus proposed in EP 1 960 177 allow obtaining satisfactory results from the point of view of productivity and quality level of the moulded objects, it would be desirable to make new general improvements, further improving the speed for obtaining the moulded object, ensuring its optimal quality at the same time.

### OBJECTS OF THE INVENTION

The object of the present invention is to provide a perfected apparatus to injection co-mould plastic material objects, including pieces being connected in an articulated manner. Particularly, an object is to provide an apparatus being able to significantly decrease the working cycle times, and by means of which it is possible to obtain finished products having an excellent quality, particularly in objects areas being particularly critical.

### BRIEF DESCRIPTION OF THE INVENTION

The objects of the invention are achievable by means of an apparatus as defined in claim 1.

Thanks to the apparatus according to the invention, particularly thanks to the cooling step and the related cooling means, a quick shape stabilization is obtained mainly in the more critical areas, such as the connection area between handle and body-container, which, being subject to non-negligible mechanical stresses in the coupling step, need a special care in order to avoid an undesired deformation or damage which could verify because the still hot plastic material, and therefore having a relatively soft consistency, did not reach a condition of full shape stability. Consequently, by speeding up the cooling, particularly of the more critical areas of the object, it is possible to decrease the object extraction times from the mould, however without risking damaging the parts to be reciprocally coupled.

### BRIEF DESCRIPTION OF THE DRAWINGS

The invention will be mainly described in the following referring to the attached drawings, wherein:
Figure 1 is a first longitudinal cross-section of a closed mould, constituting a part of the apparatus according to the invention;
Figure 2 is a second longitudinal cross-section taken in a different plane of the mould of figure 1;
Figures 3 to 10 show general views and enlarged details, suitable to illustrate the main assembly and extraction steps of the moulded object;
Figure 11 is a perspective view of a container provided with handle being co-moulded and assembled according to the invention;
Figure 12 is an enlarged detail of figure 11;
Figure 13 is a cross-section of the pivoting coupling of figure 12;
Figure 14 shows an exploded view of a second type of pivoting coupling;
Figure 15 shows a front view of the pivoting coupling of figure 14;
Figure 16 shows an exploded view of a third type of pivoting coupling;
Figure 17 shows a front view of the pivoting coupling of figure 16;
Figure 18 is a cross-section along line 18-18 of figure 17;
Figure 19 is an exploded view of a fourth articulation coupling;
Figure 20 is a detailed view of the cooling means of a moulding group, particularly of first and second pin elements.
Figure 21 is a detailed view of figure 20.

### DETAIL DESCRIPTION OF THE INVENTION

The apparatus according to the invention will be described in greater detail below, by way of example, by referring to the co-moulding and assembly of a container and the related supporting handle; however, the invention is intended to be applicable to co-mould pieces being connectable by pivoting which are part of any plastic material object being injection moulded.

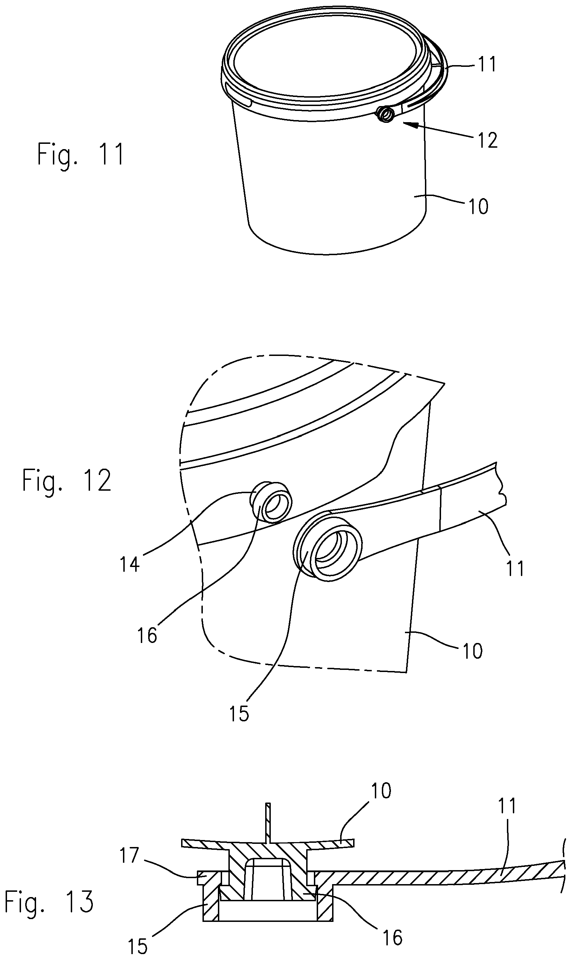

In the figures 11 to 13 a generic container has been shown with 10, which is moulded in plastic material, provided with a supporting handle 11, being co-moulded with the container 10, both suitable to be directly assembled in the mould and pivoted in diametrically opposite positions, by means of a coupling shown with 12 as a whole, only one being visible in figure 11.

In the considered example, as shown in the exploded view of figure 12, and in the cross-section of figure 13, the coupling includes a hinge pin 14 being radially protruding from the container 10, and an annular element 15 at one end of the handle 11, also called strength ring because it provides a wide supporting surface for the pin 14, on which all the weight of the fully filled container is discharged, as explained in the following.

The hinge pin 14 and the annular element 15 can have any shape, as long as they are suitable for a snap engagement by means of an axial thrust, exploiting the elastic bending of the plastic material.

In case of figures 12 and 13, the cylindrical pin 14 has a head 16 with a slightly conical shape, suitable to be snap forced in the hole of the ring 15 in order to prevent it from coming out, and allowing the rotation of the handle 11 at the same time.

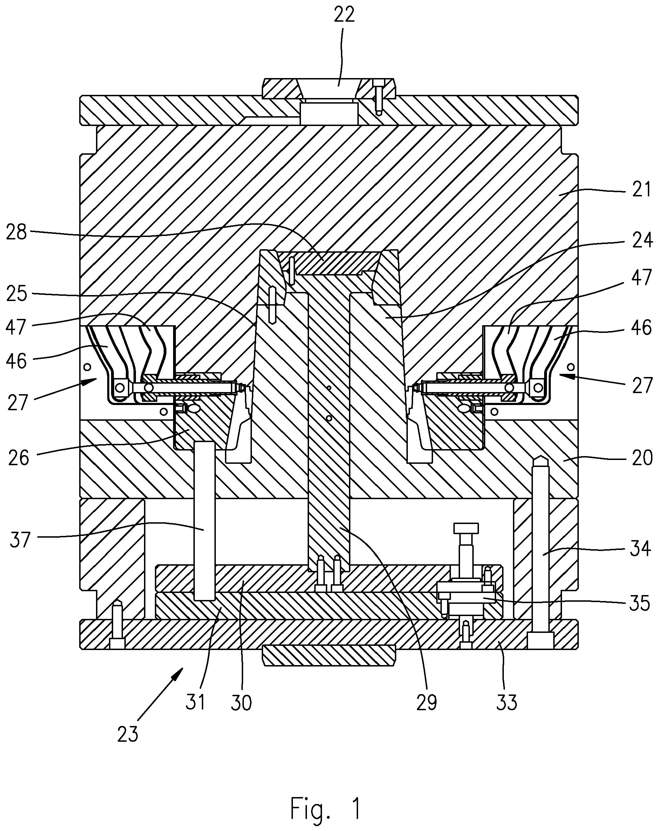

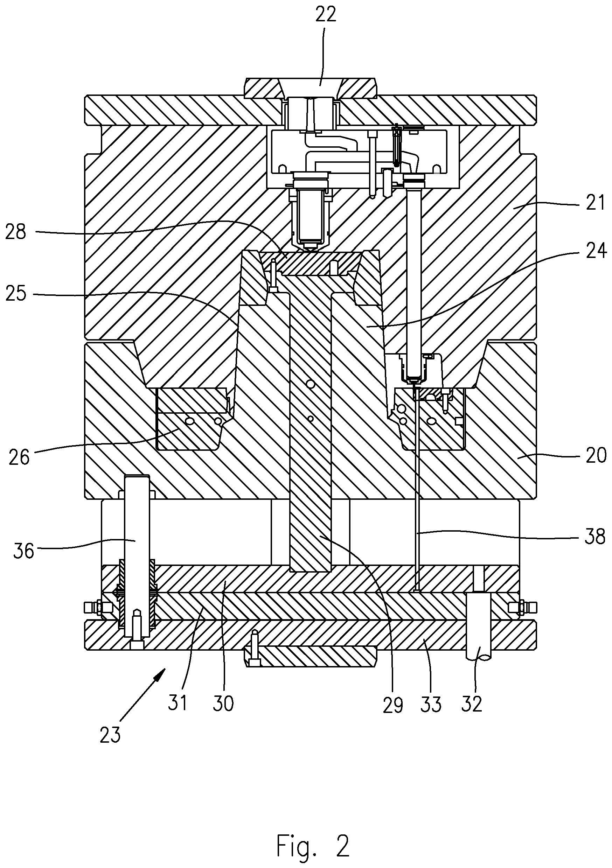

Referring now to figures 1 and 2, by way of example, an apparatus according to the invention will be described, which is suitable to co-mould the container 10 and the handle 11, by means of any press for the injection moulding.

As shown, the apparatus includes an injection mould 20, 21 being suitable to co-mould the container 10 and the handle 11 in separate impressions, by means of the same plastic material or by means of different plastic materials.

The mould includes a first mould part 20 and a second mould part 21, being suitable to be fastened to the surfaces of a common injection press, which, in their closed condition, define the moulding impressions for the container 10 and the handle 11, in which a thermoplastic material being in the melted state is injected, in a per se known way, for example through an injection hole 22 in the mould part 21. The impressions for the container 10 and the handle can be fully separated or connected through one or more passing channels for the flow of plastic material in the melted state, in order to ease the filling of the impressions themselves.

Finally, the assembly of an extraction device of the moulded object has been shown with 23, which forms an integral part of the mould, whose linear movements are advantageously used to assembly the handle 11 with the container 10 during the initial moments of the extraction step of the moulded object itself, accordingly to the present invention, as later described.

The mould part 20 includes a central core 24 intended to penetrate a corresponding cavity of the mould part 21, in order to form a first impression 25 of the container 10, as well as a second moulding impression of the handle 11, not shown. The mould part 20 also includes an extracting ring nut 26 being arranged coaxially to the central core 24.

Two auxiliary moulding groups 27, which contribute to form the impressions of the hinge pin 14 and the handle ring 15 with respective cam command systems, are associated to the mould part 20 in order to move with the extracting ring nut 26.

Always referring to figures 1 and 2, the extraction device 23 is formed by a central thrust device, including a mushroom head 28 contacting the bottom wall of the container 10, from which a stem 29, fastened to a first plate 30, elongates rearwards; the plate 30 is subject to the action of the thrusting rods 32, being commanded by linear movements of the injection press, only one being shown in figure 2.

A second plate 31 is interposed between the first thrusting plate 30 and a third plate 33 being fastened to the mould part 20 by means of tie rods 34, only one being shown in figure 1.

The plates 30 and 31 are connected to each other by a disengageable engaging device 35, in order to be moved forward together or separately by the thrusting rods 32, as it will be clarified in the following, being guided during their movement by pillars 36, one of which is shown in figure 2. The intermediate plate 31 is also provided with thrusting pillars 37, figure 1, in order to move the extracting ring nut 26 along the direction of the mould axis. Finally, with 38 in figure 2, an extraction rod for the handle has been shown, being connected to the plate 30.

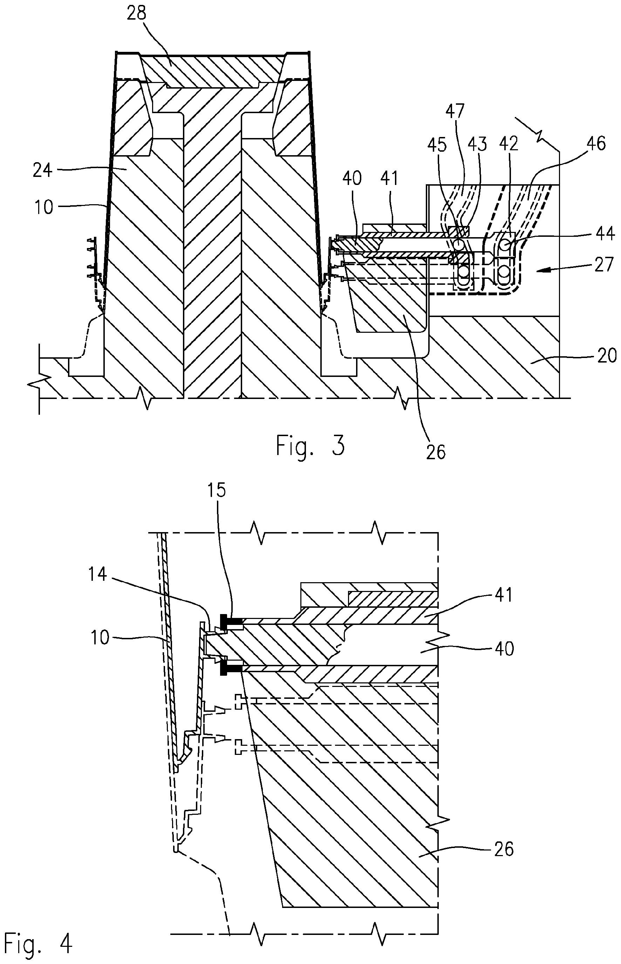

Referring now to figures 3 to 10, the two moulding groups 27 for the pin 14 and the articulation ring 15 of the handle 11 to the container 10 will be described.

As shown in figure 3 and in the enlarged detail of figure 4, each group 27 includes two coaxial moulding members that contribute to form the impressions for the pin 14 of the container and the ring 15 of the supporting handle 11.

More precisely, each auxiliary moulding group 27 includes a first internal pin element 40, being shaped in order to create both the internal impression of the hinge pin 14, and the internal impression for the ring 15. The group 27 also includes a second tubular pin element 41, being coaxially slidable on the first internal pin element 40.

Both the first pin element 40 and the second pin element 41 end with a head 42, 43 provided with a transversal pin 44, 45 being slidable along the cavity of a respective command cam 46, 47 that is suitably shaped in order to selectively command the advancing and withdrawing movements of the two pin elements 40, 41, in an independent and coordinated manner, during the movement of the ring nut 26 at the beginning of the extraction step of the moulded container.

Particularly, the second pin element 41 has a tubular shape and houses within it the first pin element 40, so as to be coaxial and mutually slidable.

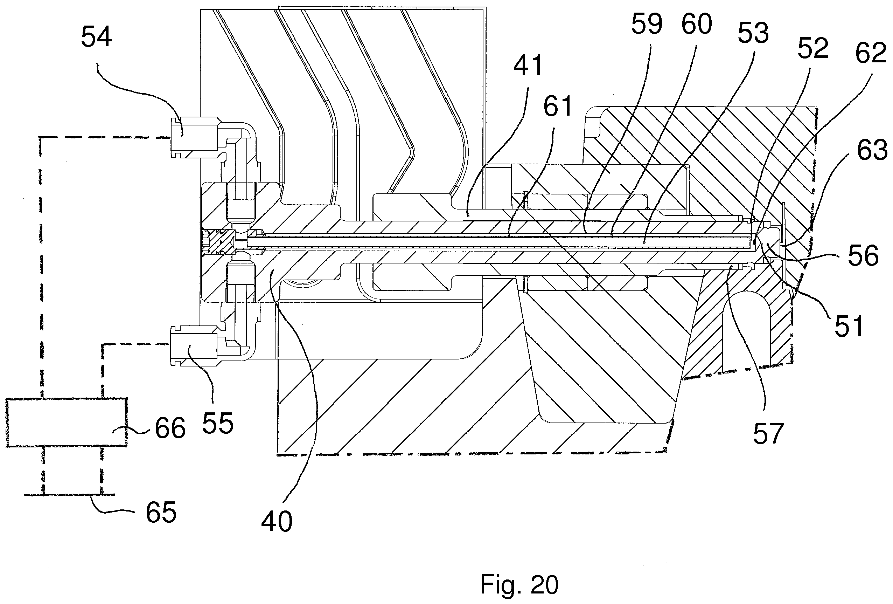

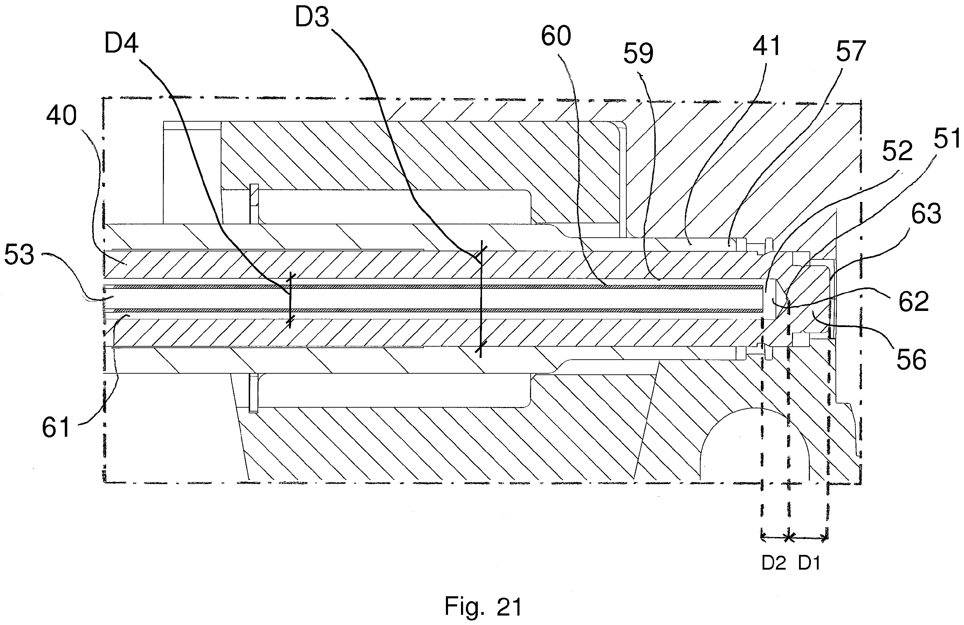

As visible in figures 20-21, the moulding members, namely the first pin element 40 and the second pin element 41 include fluid cooling means 50. The above-mentioned cooling means 50 are connected with a centralized cooling circuit 65.

The first 40 and second 41 pin elements include a first moulding end 56 and a second moulding end 57 respectively, to mould the hinge pin 14 and the annular element 15 respectively.

The first 40 and second 41 moulding members are cooled by a cooling fluid 58 by means of cooling means 50.

The cooling means 50 include a channel 52 - being obtained inside the first pin element 40 - and a tubular element 53 being longitudinally arranged inside the channel 52. The channel 52 and the tubular element 53 are coaxial.

The channel 52 is internally delimited by an internal surface 59, while the tubular element 53 is delimited by an external cylindrical surface 60.

The internal cylindrical surface 59 and the external cylindrical surface 60 define a cooling gap 61.

The cooling means 50 include a supply conduct 54 of the cooling fluid 58 and a return conduct 55 of the cooling fluid 58.

The cooling fluid 58 is sent from the supply conduct 54 towards the tubular element 53 in which that fluid flows longitudinally towards the first 56 and second 57 moulding ends, and consequently flowing inside the gap 61 to return towards the return conduct 55.

The first moulding end 56 of the first pin element 40 includes an external moulding surface 63.

The area of the first pin element 40 being close to the first moulding end 56 is defined internal area 51.

The channel 52 extends up to the internal area 51, which is spaced apart from said external moulding surface 63 by a conveniently selected quantity D1.

The tubular element 53 extends up to an end area 62 of the channel 52, which is spaced apart from the internal area 51 by a conveniently selected quantity D2.

The ratio between a diameter D4 of the internal cylindrical surface 59 of the channel 52 and an external diameter D3 of the first pin element 40 is also conveniently selected. Particularly that ratio is comprised between 0.3 and 0.9, preferably between 0.4 and 0.8.

The cooling fluid 58 can be water or other cooling liquid, generally having a temperature comprised between 8°C and 20°C, and a pressure comprised between 3 and 5 bar.

The fluid 58 flows inside the tubular element 53 existing in the first pin element 40, until arriving to the end area 62 close to the internal area 51 of the first pin element 40.

That internal area 51, being very close to the piece being moulded and due to the general geometrical configuration, is critical from the thermal point of view: actually, in that area, very high temperatures are reached. Only thanks to the cooling action carried out by the cooling means, particularly the tubular element 53 and the gap 61, is possible to quickly cool the internal area 51 in contrast with the state of the art plants wherein it is necessary to wait longer times in order to allow extracting the moulded object without damaging the same.

A control unit 66 is also provided, which is configured to control parameters, such temperature and pressure, associated to the cooling fluid 58 and to adjust the circulation of the fluid 58 itself.

The operating mode of the mould is based on the following reported steps, illustrated in the figures 3 to 10.

After the injection step of the plastic material in the melted state in the impressions of the container 10 and handle 11, and after the successive cooling of the first 40 and second 41 pin elements too by means of the previously described cooling means 50, the mould 20, 21 opening and finished object expulsion steps start.

It is envisioned to feed a cooling fluid 58 in the cooling tubular element 53 during all the injection co-moulding operations.

That cooling action allows cooling the first 40 and second 41 pin elements and the annular element 15 and the hinge pin 14 as well accordingly.

Then, once started the press opening and the partial or total separation of the mould part 21 from the mould part 20, the extraction step of the moulded object starts. During that step, the rods 32, by exploiting the linear movements of the press, push forward the first extraction plate 30 together with the intermediate plate 31 to which it is mechanically connected by means of the engagement devices 35. Advancing the plates 30 and 31, causes the advancing of the central thrust member 28, 29, the extracting ring nut 26 and the handle extraction rod 38 at the same time. In this way, the container 10 and the handle 11 start coming out from the respective impressions.

That movement, in the direction of the mould axis, particularly of the extracting ring nut 26, is associated with a coordinated movement of the first and second pin elements 40, 41 which, following the two cams 46, 47, radially move making coordinated movements so as to cause the engagement of the ring 15 with the hinge pin 14 in an aligned condition, by means of an axial thrust and a following disengagement of the first and second pin elements 40, 41 themselves in order to finish the extraction of the container 10 and handle 11 in an already assembled condition.

The characteristics of the apparatus according to the invention can be better understood by referring to figures 1 to 10 that clearly show the sequence of the fundamental operating steps, and the positions being taken by the first and second pin elements 40, 41 of the two auxiliary moulding groups 27, commanded by the respective cams, following the linear movements of the press extraction device.

Figure 1 shows the starting position of the extracting ring nut 26 and the first and second pin elements 40 and 41, at the end of the moulding step.

The starting position of the first and second pin elements 40 and 41 is also shown, with a dashed line, in figure 3 and in the enlarged detail of figure 4.

As it could be seen in those figures, in their all forward initial condition, the first and second pin elements 40 and 41 contribute together with the internal surfaces of the mould, in order to form the moulding impressions of the hinge pin 14 and ring 15 of the supporting handle.

Figures 3 and 4, with a continuous line, also show a second position of the ring nut 26 with the central extraction mushroom 28 of the container 10 and the first and second pin elements 40, 41, after a brief forward movement of the two plates 30 and 31.

As previously reported, the radial movements of the first and second pin elements 40 and 41 are controlled and coordinated by the respective cams 46 and 47; in the condition of figures 3 and 4, after the first forward movement of the ring nut 26, the first internal pin element 40 is slightly withdrawn with respect to the hinge pin 14, while the second tubular pin element 41 is advanced by pushing the ring 15 of the handle against the conical head 16 of the hinge pin; at the same time, also the container 10 starts to be partially expelled from the mould part 20.

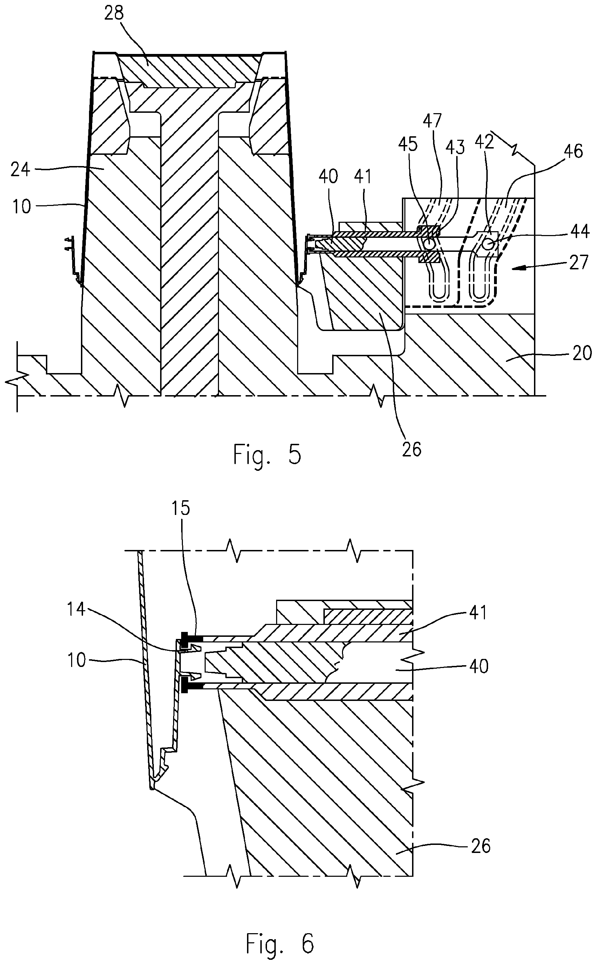

Figures 5 and 6 show a second condition during the extraction and assembly step of the handle and the container, after a further forward movement of the plates 30 and 31.

In that condition, as clearly highlighted by the enlarged detail of figures 6, the first pin element 40 has been further withdrawn until totally coming out and disengaging from the hinge pin 14. On the contrary, the second pin element 41 has been advanced again by pushing the handle ring 15 to snap engage on the hinge pin 14; during this initial part of the extraction step, therefore the assembly of the handle 11 and the container 10 is carried out, directly in the mould, during the extraction itself.

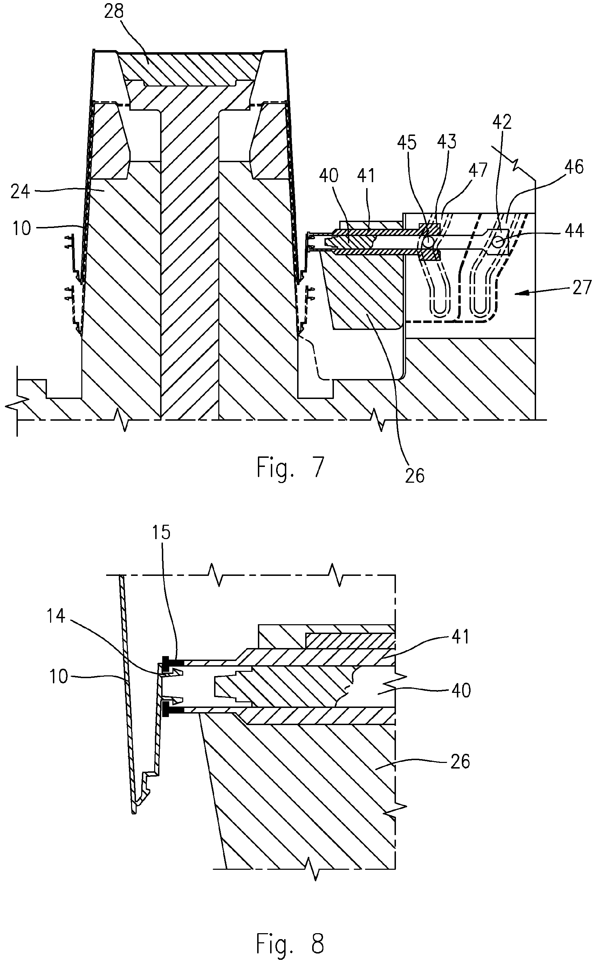

Figures 7 and 8 show a third intermediate condition, wherein the first internal pin element 40 has been further turned away, while the second external pin element 41 remained in its advanced position.

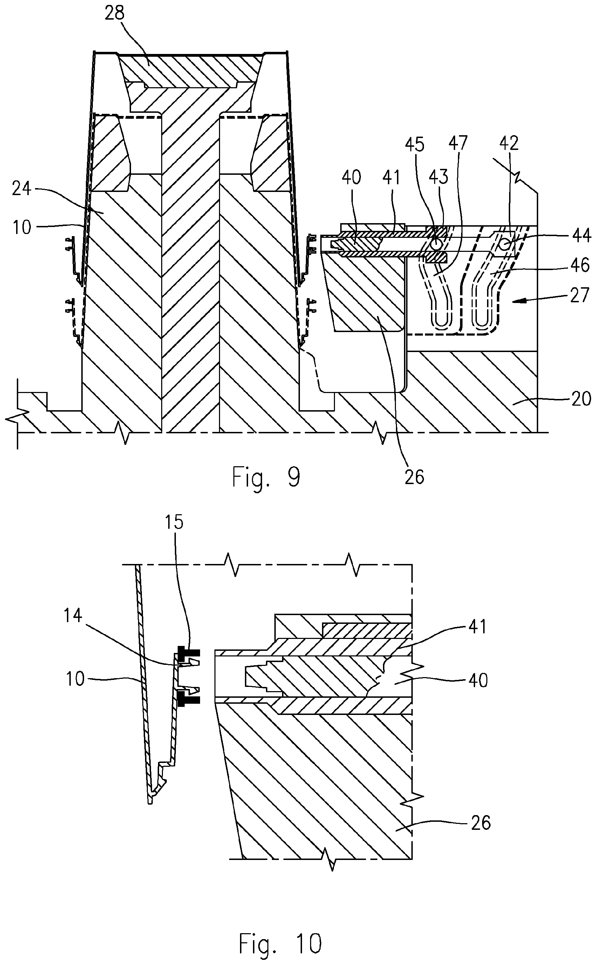

Figures 9 and 10 show a final condition, during the extraction step, wherein the first and second pin elements 40 and 41 have been fully withdrawn, releasing both the hinge pin 14 and the ring 15 of the supporting handle.

At this point the engagement devices 35 are activated, releasing plate 30 from plate 31; by continuing the movement of the rods 32, the container 10 having the handle 11 perfectly assembled can be definitively disengaged from the extracting ring nut 26, and expelled from the mould.

The assembly and engagement step between the handle and the container has been described and referred to the example of figures 11-13; however, it is clear that the assembly step can also vary with respect to what shown, depending on the different possible shapes of the articulation pins and the supporting handle rings, always with the purpose to practically obtain an effective union.

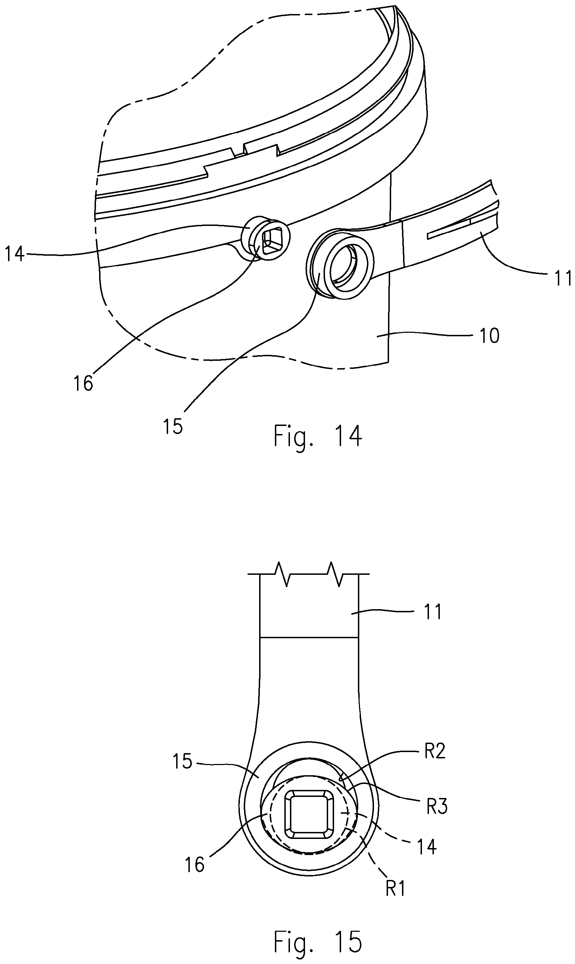

For that purpose, figures 14 and 15 show a second possible solution for the hinge pin 14 and the ring 15.

As it can be seen in the two figures, the pin 14 again has a cylindrical shape with a radius R1 less than the internal radius R2 of the ring 15. On the contrary, the head 16 of the hinge pin has a substantially oval shape, whose major axis extends in a horizontal direction, or transversally to the axis of the container 10. In turn, the head 16 of the hinge pin, in the direction of its minor axis, has a radius of curvature R3 equal to the internal radius of curvature R1 of the ring 15; the ring 15 itself, on the back side facing the container, has an oval hole that fits the shape of the head 16, in order to allow a snap assembly, by means of a simple axial thrust of the second pin element 41, as previously reported. The corresponding radii of curvature R2 and R3 also allow obtaining a wide contact surface between the head 16 of the hinge pin and the ring 15 of the handle, in the vertical or raised position of the latter, as shown in figure 15; that allows a greater load distribution between the pin 14 and the strength ring 15.

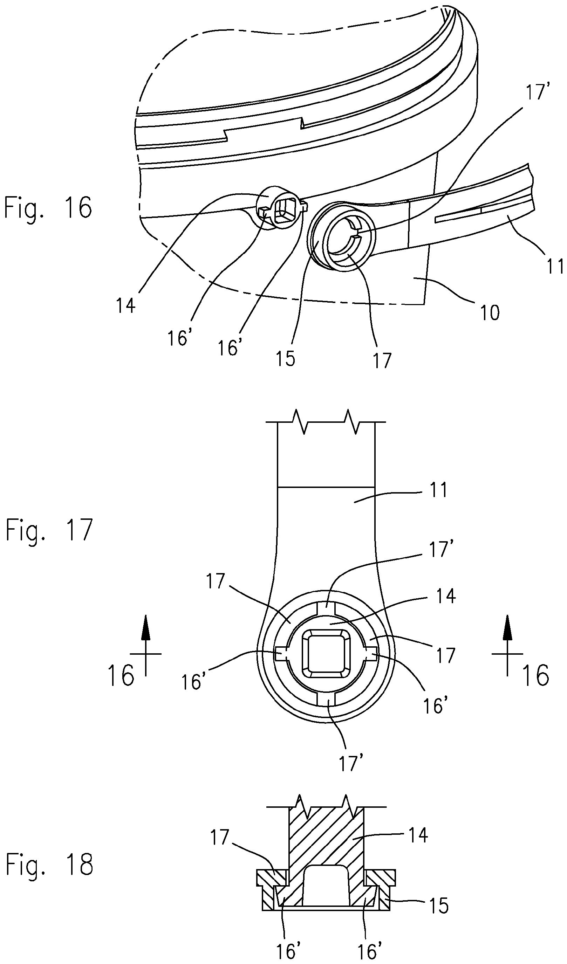

Figures 16, 17 and 18 show a third solution for an articulation coupling that can be assembled during the extraction step of the moulded object, in a manner according to the present invention.

In case of figures 16-18, the pin 14 has two radial teeth 16' being arranged horizontally with respect to the container 10, while at the back shoulder 17 the ring 15 has two slots 17', being aligned with the teeth 16' in the assembly condition inside the mould, shown in figure 16.

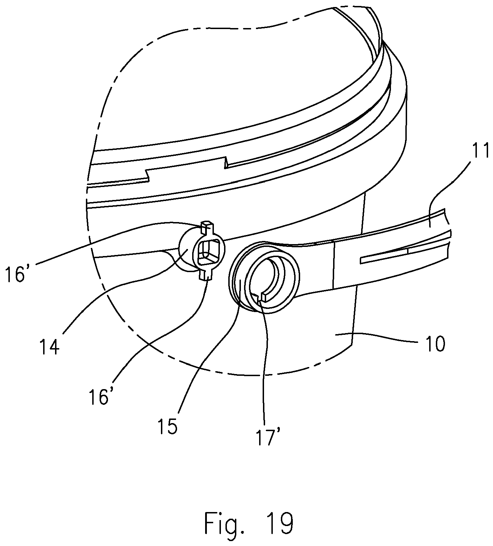

Both in this case, and in the preceding cases of figures 11-13, 14-16, besides the following case of figure 19, the parts with a positive and negative interlock of pins 14 and rings 15 should be such to have a slight interference, suitable to allow a reciprocal snap engagement, by means of the elastic bending of the plastic material, preventing a following disengagement whichever the position taken by the handle 11 is with respect to the container 10.

Figure 19 shows a fourth solution very similar to the one of the preceding example, with the only difference that now the teeth 16' have a vertical arrangement; therefore, in figure 19 the same numerical references have been used to indicate similar or equivalent parts.

The engagement devices 35 can be of a mechanical type or realized by means of hydraulic, pneumatic cylinders or actuators of any other type.

Referring to the examples of the attached drawings, from what said and shown, it will be clear that an apparatus was provided to co-mould plastic material objects, including separate parts that can be assembled and connected by pivoting during the extraction step from the mould, in order to achieve the previously reported purposes. However, it is intended that other modifications and/or variations could be made to the apparatus, articulation pins and rings of the supporting handle and cooling means depending on specific manufacturing needs or on the type of the object to be moulded, without departing from the objects of the claims.

## Claims

1. Apparatus for injection moulding of objects made of plastics comprising a first piece (10) provided with an hinge pin (14), and a second piece (11) provided with an annular element (15) that are connectable in an articulated manner, the apparatus comprising:
an injection mould (20, 21), comprising a first (40) moulding member and a second (41) moulding member defining the impressions of the annular element (15) and of the hinge pin (14) respectively, said first (40) and second (41) moulding members comprising respectively a first pin element (40) and a second pin element (41), that are movable slidably and coaxially together, wherein said first (40) and second (41) pin element comprise respectively a first moulding end (56) and a second moulding end (57) for moulding said hinge pin (14) and said annular element (15) respectively;
an extracting device (23) which is movable linearly in an axial direction comprising an external ring nut (26) that is movable in an axial direction, said first (40) and second (41) pin elements being supported in a radially movable manner by said extracting ring nut (26),
cam drive means (46, 47) for moving selectively said first (40) and second (41) moulding members between an advanced moulding condition, an assembly condition and a retracted condition of disengagement of the pin (14) and of the annular hinge element (15);
said first (40) and second (41) moulding members being supported by a component that is movable from the mould, forming part of the extracting device (23);
**characterised in that** it further comprises cooling means (50) for cooling said first (40) and second (41) pin elements with a cooling fluid (58)
wherein said cooling means (50) comprises a channel (52) inside the first pin element (40), a tubular element (53) inside the channel (52) in a longitudinal direction along the axis of the channel (52), said channel (52) and tubular element (53) being coaxial to one another.

2. Apparatus according to claim 1, wherein said channel (52) inside the first pin element (40) and tubular element (53) inside the channel (52) are respectively bounded by an internal cylindrical surface (59) of the channel (52) and an external cylindrical surface (60) of the tubular element (53), said internal cylindrical surface (59) and external cylindrical surface (60) defining a gap (61).

3. Apparatus according to claim 2, wherein said cooling means (50) comprises a delivery conduit (54) of the cooling fluid (58) and a return conduit (55) of the cooling fluid (58), said delivery conduit (54) being arranged for sending said cooling fluid (58) inside said tubular element (53), and said return conduit (55) being arranged for the evacuation of said cooling fluid (58) once it has passed through said tubular element (53) and coming from said gap (61).

4. Apparatus according to any one of claims 1 to 3, wherein said cooling means (50) is connected to a centralised cooling system (65).

5. Apparatus according to any one of claims 1 to 4, wherein said first (40) and second (41) pin elements comprise respectively a first moulding end (56) and a second moulding end (57) for moulding said hinge pin (14) and said annular element (15) respectively.

6. Apparatus according to claim 5, wherein said first moulding end (56) of the first pin element (40) comprises an external moulding surface (63), and wherein said channel (52) extends as far as an internal zone (51) of said first pin element (40) that is spaced away from said external moulding surface (63) by an amount D1.

7. Apparatus according to claim 6 as claim 5 is depending from any one of claims 1 to 3 or to claim 4 as depending from any one of claims 1 to 3, wherein said tubular element (53) extends as far as an end zone (62) of the channel (52) that is spaced away from said internal zone (51) by an amount (D2).

8. Apparatus according to any one of claims 1 to 7, comprising a control unit (66) configured for controlling parameters such as temperature and pressure, associated with said cooling fluid (58) and for regulating the circulation of said fluid (58).

## Patentansprüche

1. Einrichtung zum Spritzgießen von Gegenständen, die aus Kunststoff hergestellt sind, umfassend ein erstes Teil (10), das mit einem Scharnierstift (14) ausgestattet ist, und ein zweites Teil (11), das mit einem ringförmigen Element (15) ausgestattet ist, die in einer gelenkig gelagerten Weise verbindbar sind, wobei die Einrichtung umfasst:
eine Spritzgussform (20, 21), umfassend ein erstes (40) Formglied und ein zweites (41) Formglied, die jeweils die Abdrücke des ringförmigen Elements (15) und des Scharnierstifts (14) definieren, wobei das erste (40) und zweite (41) Formglied jeweils ein erstes Stiftelement (40) und ein zweites Stiftelement (41) umfassen, die verschiebbar und koaxial miteinander beweglich sind, wobei das erste (40) und zweite (41) Stiftelement jeweils ein erstes Formende (56) und ein zweites Formende (57) zum Formen jeweils des Scharnierstifts (14) und des ringförmigen Elements (15) umfassen;
eine Abziehvorrichtung (23), die linear in eine axiale Richtung beweglich ist, umfassend eine externe Ringmutter (26), die in eine axiale Richtung beweglich ist, wobei das erste (40) und zweite (41) Stiftelement in einer radial beweglichen Weise von der Abziehringmutter (26) gestützt werden,
Nockenantriebsmittel (46, 47) zum wahlweisen Bewegen des ersten (40) und zweiten (41) Formglieds zwischen einem vorgeschobenen Formzustand, einem Zusammensetzzustand und einem zurückgezogenen Zustand des Nichteingriffs des Stifts (14) und des ringförmigen Scharnierelements (15);
wobei das erste (40) und zweite (41) Formglied von einer Komponente gestützt werden, die von der Form beweglich ist, wobei sie ein Teil der Abziehvorrichtung (23) ist;
**dadurch gekennzeichnet, dass** sie weiter ein Kühlmittel (50) zum Kühlen des ersten (40) und zweiten (41) Stiftelements mit einem Kühlfluid (58) umfasst, wobei das Kühlmittel (50) einen Kanal (52) innerhalb des ersten Stiftelements (40), ein rohrförmiges Element (53) innerhalb des Kanals (52) in eine Längsrichtung entlang der Achse des Kanals (52) umfasst, wobei der Kanal (52) und das rohrförmige Element (53) koaxial zueinander sind.

2. Einrichtung nach Anspruch 1, wobei der Kanal (52) innerhalb des ersten Stiftelements (40) und das rohrförmige Element (53) innerhalb des Kanals (52) jeweils von einer internen zylindrischen Oberfläche (59) des Kanals (52) und einer externen zylindrischen Oberfläche (60) des rohrförmigen Elements (53) begrenzt werden, wobei die interne zylindrische Oberfläche (59) und die externe zylindrische Oberfläche (60) einen Spalt (61) definieren.

3. Einrichtung nach Anspruch 2, wobei das Kühlmittel (50) eine Zuführleitung (54) des Kühlfluids (58) und eine Rücklaufleitung (55) des Kühlfluids (58) umfasst, wobei die Zuführleitung (54) zum Senden des Kühlfluids (58) in das rohrförmige Element (53) angeordnet ist und die Rücklaufleitung (55) zur Ableitung des Kühlfluids (58) angeordnet ist, sobald es durch das rohrförmige Element (53) durchgegangen ist, und von dem Spalt (61) kommt.

4. Einrichtung nach einem der Ansprüche 1 bis 3, wobei das Kühlmittel (50) an ein zentralisiertes Kühlsystem (65) angeschlossen ist.

5. Einrichtung nach einem der Ansprüche 1 bis 4, wobei das erste (40) und zweite (41) Stiftelement jeweils ein erstes Formende (56) und ein zweites Formende (57) zum Formen jeweils des Scharnierstifts (14) und des ringförmigen Elements (15) umfassen.

6. Einrichtung nach Anspruch 5, wobei das erste Formende (56) des ersten Stiftelements (40) eine externe Formoberfläche (63) umfasst und wobei sich der Kanal (52) so weit wie eine interne Zone (51) des ersten Stiftelements (40) erstreckt, die von der externen Formoberfläche (63) um ein Maß D1 beabstandet ist.

7. Einrichtung nach Anspruch 6, so Anspruch 5 von einem der Ansprüche 1 bis 3 abhängt, oder nach Anspruch 4, so er von einem der Ansprüche 1 bis 3 abhängt, wobei sich das rohrförmige Element (53) so weit wie eine Endzone (62) des Kanals (52) erstreckt, die von der internen Zone (51) um ein Maß (D2) beabstandet ist.

8. Einrichtung nach einem der Ansprüche 1 bis 7, umfassend eine Steuereinheit (66), die zum Steuern von Parametern wie Temperatur und Druck, in Zusammenhang mit dem Kühlfluid (58), und zum Regeln des Umlaufs des Fluids (58) ausgestaltet ist.

## Revendications

1. Appareil pour le moulage par injection d'objets fabriqués en matière plastique comprenant une première pièce (10) dotée d'un axe d'articulation (14), et une seconde pièce (11) dotée d'un élément annulaire (15) qui sont raccordables de manière articulée, l'appareil comprenant :
un moule d'injection (20, 21) comprenant un premier (40) élément de moulage et un second (41) élément de moulage définissant respectivement les impressions de l'élément annulaire (15) et de l'axe d'articulation (14), lesdits premier (40) et second (41) éléments de moulage comprenant respectivement un premier élément d'axe (40) et un second élément d'axe (41) qui sont mobiles de manière coulissante et coaxialement ensemble, dans lequel lesdits premier (40) et second (41) éléments d'axe comprennent respectivement une première extrémité de moulage (56) et une seconde extrémité de moulage (57) pour le moulage respectivement dudit axe d'articulation (14) et dudit élément annulaire (15) ;
un dispositif d'extraction (23) qui est mobile linéairement dans une direction axiale comprenant un écrou annulaire externe (26) qui est mobile dans une direction axiale, lesdits premier (40) et second (41) éléments d'axe étant supportés de manière radialement mobile par ledit écrou annulaire d'extraction (26),
des moyens d'entraînement de came (46, 47) pour le déplacement sélectif desdits premier (40) et second (41) éléments de moulage entre une condition de moulage avancée, une condition d'assemblage et une condition rétractée de mise hors prise de l'axe (14) et de l'élément d'articulation annulaire (15) ;
lesdits premier (40) et second (41) éléments de moulage étant supportés par un composant qui est mobile depuis le moule, formant une partie du dispositif d'extraction (23) ;
**caractérisé en ce qu'**il comprend en outre un moyen de refroidissement (50) pour le refroidissement desdits premier (40) et second (41) éléments d'axe avec un fluide de refroidissement (58),
dans lequel ledit moyen de refroidissement (50) comprend un canal (52) à l'intérieur du premier élément d'axe (40), un élément tubulaire (53) à l'intérieur du canal (52) dans une direction longitudinale le long de l'axe du canal (52), lesdits canal (52) et élément tubulaire (53) étant coaxiaux l'un à l'autre.

2. Appareil selon la revendication 1, dans lequel ledit canal (52) à l'intérieur du premier élément d'axe (40) et ledit élément tubulaire (53) à l'intérieur du canal (52) sont respectivement délimités par une surface cylindrique interne (59) du canal (52) et une surface cylindrique externe (60) de l'élément tubulaire (53), ladite surface cylindrique interne (59) et ladite surface cylindrique externe (60) définissant une fente (61).

3. Appareil selon la revendication 2, dans lequel ledit moyen de refroidissement (50) comprend un conduit de fourniture (54) du fluide de refroidissement (58) et un conduit de retour (55) du fluide de refroidissement (58), ledit conduit de fourniture (54) étant agencé pour envoyer ledit fluide de refroidissement (58) à l'intérieur dudit élément tubulaire (53), et ledit conduit de retour (55) étant agencé pour l'évacuation dudit fluide de refroidissement (58) une fois qu'il a passé au travers dudit élément tubulaire (53) et venant de ladite fente (61).

4. Appareil selon l'une quelconque des revendications 1 à 3, dans lequel ledit moyen de refroidissement (50) est raccordé à un système de refroidissement centralisé (65).

5. Appareil selon l'une quelconque des revendications 1 à 4, dans lequel lesdits premier (40) et second (41) éléments d'axe comprennent respectivement une première extrémité de moulage (56) et une seconde extrémité de moulage (57) pour le moulage respectivement dudit axe d'articulation (14) et dudit élément annulaire (15).

6. Appareil selon la revendication 5, dans lequel ladite première extrémité de moulage (56) du premier élément d'axe (40) comprend une surface de moulage externe (63), et dans lequel ledit canal (52) s'étend aussi loin qu'une zone interne (51) dudit premier élément d'axe (40) qui est espacée de ladite surface de moulage externe (63) d'une quantité D1.

7. Appareil selon la revendication 6 lorsque la revendication 5 dépend de l'une quelconque de revendications 1 à 3 ou la revendication 4 lorsqu'elle dépend de l'une quelconque des revendications 1 à 3, dans lequel ledit élément tubulaire (53) s'étend aussi loin qu'une zone d'extrémité (62) du canal (52) qui est espacée de ladite zone interne (51) d'une quantité (D2).

8. Appareil selon l'une quelconque des revendications 1 à 7, comprenant une unité de commande (66) configurée pour commander des paramètres tels que la température et la pression, associés audit fluide de refroidissement (58) et pour réguler la circulation dudit fluide (58).
